# FASCICULE DE BREVET EUROPEEN

(11) **EP 3 671 091 B1**
(45) Date de publication et mention de la délivrance du brevet: **13.08.2025**
(21) Numéro de dépôt: 19214024.2
(22) Date de dépôt: 06.12.2019
(51) Int. Cl.: F28D 7/00, F28D 7/08, F02C 7/224, F02C 7/14

(54) **ÉCHANGEUR DE CHALEUR HUILE CARBURANT**
ÖL-KRAFTSTOFF-WÄRMETAUSCHER
FUEL-OIL HEAT EXCHANGER

(30) Priorité: 21.12.2018 BE 201805931
(43) Date de publication de la demande: 24.06.2020
(73) Titulaire: Safran Aero Boosters SA, 4041 Herstal (BE)
(72) Inventeur: KOEUNE, Roxanne, 4041 Herstal (BE); FELLIN, Nicolas, 4041 Herstal (BE)
(74) Mandataire: Ipsilon Benelux

(56) Documents cités:
- EP-A1- 2 775 244
- US-A1- 2018 057 942
- US-A1- 2018 297 843
- US-B1- 9 976 815

## Description

### Domaine technique

L'invention se rapporte au domaine des échangeurs de chaleur de turbomachine. Plus précisément, l'invention propose un échangeur de chaleur huile/carburant de turbomachine. L'invention a également trait à une turbomachine axiale, notamment un turboréacteur. L'invention propose en outre un procédé de réalisation d'un échangeur de chaleur.

### Technique antérieure

Le document US 2018/0057942 A1 divulgue un échangeur huile/carburant pour aéronefs, obtenu par fabrication additive, comprenant un groupe de canaux parallèles rectilignes formés entre deux collecteurs. Le carburant circule dans ces canaux et est chauffé par de l'huile qui circule dans une cavité délimitée par des parois de guidage et une paroi cylindrique. L'échangeur connu ne permet pas d'avoir une distribution homogène du carburant circulant dans les canaux. Ceci implique que le potentiel d'échange de chaleur n'est pas exploité à son maximum dans toutes les zones de la cavité.

Un autre exemple d'échangeur de chaleur est divulgué par le document US 9,976,815 B1 comprenant un réseau de tubes non linéaires disposés en parallèle. Cet échangeur de l'état de l'art ne permet pas, non plus d'avoir une distribution homogène des deux fluides.

Enfin, le document US 2018/0187984 A1 décrit un échangeur comprenant une structure dite gyroïde, c.-à-d. une surface minimale triplement périodique. Un tel échangeur présente le désavantage que les surfaces en contact avec les deux fluides sont identiques, ce qui n'est pas toujours intéressant pour un échangeur, notamment du fait de débits ou d'écoulements différents pour les deux fluides en jeu. Pour compenser cette différence inhérente aux écoulements, il est nécessaire d'ajouter aux structures gyroïdes des ailettes pour former des obstacles ralentissant un des fluides. Or, les ailettes sont difficilement intégrables dans une structure dite gyroïde. Aussi, cette conception nécessite un procédé de fabrication particulier, en l'occurrence LBM (« Laser Beam Machining » pour usinage par rayonnement laser).

Le document US2018297843 divulgue un échangeur de chaleur comprenant un réseau de mailles tubulaires selon l'état de l'art.

### Résumé de l'invention

### Problème technique

L'invention a pour objectif de résoudre au moins un des problèmes posés par l'art antérieur. L'invention a pour objectif d'optimiser l'échange thermique, les pertes de charge, et éventuellement le fonctionnement d'une turbomachine. L'invention a également pour objectif de proposer une solution simple et compacte, facile à produire et commode d'entretien.

### Solution technique

L'invention a pour objet un échangeur de chaleur selon la revendication 1.

Selon un mode avantageux de l'invention, l'échangeur comprend une ou plusieurs des caractéristiques techniques suivantes, selon toute combinaison possible:
- un empilement, préférentiellement de 5 à 40 couches de mailles dans la direction de référence ;
- préférentiellement entre 200 et 3000 mailles ;
- l'épaisseur de la paroi formant les ramifications et les jonctions est préférentiellement comprise entre 0,4 et 0,8 mm ;
- le nombre de ramifications antérieures est différent du nombre de ramifications postérieures pour une maille donnée ;
- le nombre de ramifications antérieures est égal au nombre de ramifications postérieures pour une maille donnée ;
- le nombre de ramifications antérieures de la première maille est différent du nombre de ramifications antérieures de la deuxième maille et/ou le nombre de ramifications postérieures de la première maille est différent du nombre de ramifications postérieures de la deuxième maille ;
- le nombre de ramifications de chaque maille est de 4, 6, 8, 10 ou 12 ;
- au moins une des mailles supporte au moins une ailette interne ou externe ;
- le réseau de mailles tubulaires est disposé entre une cloison d'entrée et une cloison de sortie dans lesquelles débouchent les passages formés par le réseau de mailles tubulaires, le réseau de mailles tubulaires guidant le premier fluide d'un collecteur d'entrée vers un collecteur de sortie, le collecteur d'entrée étant délimité en partie par la cloison d'entrée et le collecteur de sortie étant délimité en partie par la cloison de sortie ;
- la paroi latérale du corps de l'échangeur a une forme sensiblement cylindrique, d'un diamètre préférentiellement compris entre 7 et 25 cm et une hauteur préférentiellement comprise entre 10 et 60 cm, l'axe du cylindre étant aligné avec la direction de référence ;
- un canal de by-pass pour le premier fluide en by-pass du réseau de mailles tubulaires, le canal de by-pass étant disposé dans une position centrale de l'échangeur et sensiblement aligné avec la direction de référence ;
- le diamètre du canal de by-pass est compris préférentiellement entre 30 et 60 % du diamètre du corps ;
- au moins un élément de guidage et/ou la face interne de la paroi latérale qui guide(nt) le second fluide dans une partie de la cavité dans une direction d'écoulement de référence sensiblement parallèle à la direction de référence sur au moins une majorité de la hauteur du corps ;
- l'élément de guidage guide en outre le second fluide dans une autre partie de la cavité sur au moins une majorité de la hauteur du corps dans une direction opposée à la direction d'écoulement de référence, la direction étant sensiblement parallèle à la direction de référence ;
- l'élément de guidage comprend au moins une paroi de séparation s'étendant en partie dans un plan parallèle à la direction de référence entre la cloison d'entrée et la cloison de sortie ;
- l'échangeur de chaleur est en aluminium ;
- l'échangeur de chaleur est monobloc et/ou venu de matière. Ainsi, l'intégralité des réseaux de mailles, les collecteurs, le by-pass et le corps de l'échangeur sont fait lors d'un seul tenant et réalisé lors d'une seule opération de fabrication ;
- l'échangeur de chaleur est apte à recevoir du carburant comme premier fluide et de l'huile comme deuxième fluide ;
- un by-pass de dérivation pour le second fluide est intégré dans l'échangeur de chaleur ;
- une vanne du type décharge et/ou thermostatique rapportée dans le canal de by-pass, et une autre vanne du type décharge et/ou thermostatique rapportée dans le by-pass de dérivation ;
- la répartition des mailles dans l'échangeur n'est pas nécessairement homogène. Ainsi, le nombre de mailles peut être plus dense radialement à l'intérieur ou à l'extérieur. La densité de mailles peut être plus importante axialement au voisinage de l'entrée des fluides pour favoriser un parcours très chaotique des fluides dès leur entrée dans l'échangeur. Aussi, les diamètres des mailles peuvent varier selon les étages de mailles par exemple ou inversement proportionnellement à la densité des mailles.

L'invention concerne aussi un turboréacteur d'aéronef comprenant des paliers et notamment une transmission entraînant une soufflante, et l'échangeur de chaleur selon l'invention.

L'invention concerne aussi un procédé de réalisation d'un échangeur de chaleur selon l'invention, le procédé comprenant les étapes suivantes :
(a) conception de l'échangeur de chaleur ;
(b) réalisation de l'échangeur de chaleur selon l'invention par fabrication additive suivant une direction d'impression parallèle à la direction de référence.

L'invention peut alternativement ou en complément avoir pour objet un échangeur remarquable en ce que la multitude de mailles comprend au moins une maille dont toutes les ramifications antérieures sauf au moins une sont connectées à des ramifications postérieures d'une autre maille.

L'invention peut en complément avoir pour objet un échangeur remarquable en ce que la multitude de mailles comprend des étages de mailles agencés successivement selon la direction de référence, chaque jonction des mailles d'un étage donné étant décalée (optionnellement en quinconce) par rapport aux jonctions de l'étage adjacent, dans une direction perpendiculaire à la direction de référence.

De manière générale, les modes avantageux de chaque objet de l'invention sont également applicables aux autres objets de l'invention. Dans la mesure du possible, chaque objet de l'invention est combinable aux autres objets. Les objets de l'invention sont également combinables aux modes de réalisation de la description, qui en plus sont combinables entre eux.

### Avantages apportés

La solution proposée est une solution compacte, légère et efficiente en termes d'échanges thermiques. La structure particulière du réseau de mailles tubulaires permettant une redistribution du fluide garantit que toutes les zones de l'échangeur de chaleur, même les zones les plus excentrées, aient un échange de chaleur optimal. Cette solution permet de réduire la taille et donc le poids de l'échangeur, tout en gardant le même rendement. La forme des conduites incurvées et la répétition de zones de croisements entre les tubes favorisent la turbulence et donc améliorent les transferts de chaleur. Par ailleurs, le réseau de mailles tubulaires forme une structure autoporteuse facilitant la conception de l'ensemble. La présence d'un by-pass central évite le risque de colmatage de l'échangeur par grand froid. Enfin, l'échangeur est une pièce monobloc éliminant les risques de fuite tout en garantissant une très bonne résistance aux efforts.

### Brève description des dessins

La figure 1 représente une turbomachine selon l'invention ;
La figure 2 illustre un échangeur selon l'invention ;
La figure 3 représente une première variante de maille avec quatre ramifications disposées dans un plan ;
La figure 4 montre une deuxième variante de maille avec quatre ramifications, disposées dans deux plans sécants ;
La figure 5 illustre une troisième variante de maille, dite asymétrique avec cinq ramifications ;
La figure 6 représente une quatrième variante de maille avec six ramifications avec une symétrie de rotation ;
La figure 7 montre une cinquième variante de maille avec six ramifications avec une symétrie spéculaire ;
La figure 8 montre une sixième variante de maille avec huit ramifications avec une symétrie spéculaire ;
La figure 9 illustre différentes alternatives de jonctions possibles.

### Description des modes de réalisation

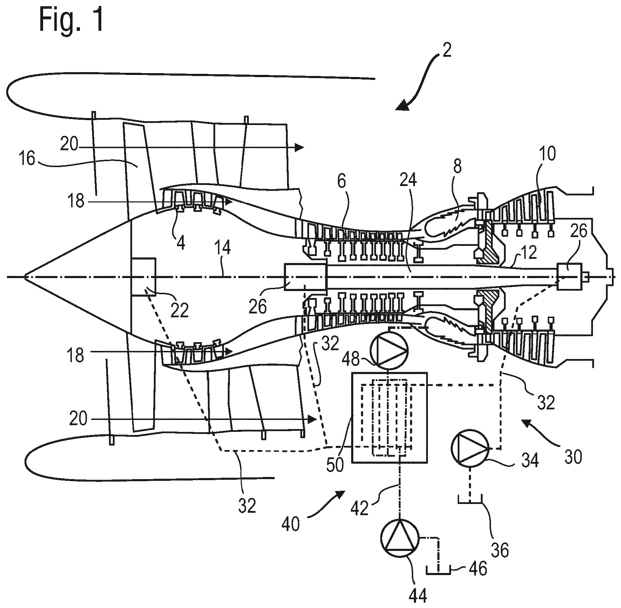

La figure 1 représente de manière simplifiée une turbomachine axiale 2. Le turboréacteur 2 comprend un premier compresseur, basse-pression 4 et un deuxième compresseur, haute-pression 6, une chambre de combustion 8 et une ou plusieurs turbines 10. En fonctionnement, la puissance mécanique de la turbine 10 transmise au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Une soufflante 16 est couplée au rotor 12 et génère un flux d'air qui se divise en un flux primaire 18 et en un flux secondaire 20 traversant un conduit annulaire (partiellement représenté) le long de la machine pour ensuite rejoindre le flux primaire en sortie de turbine.

Des moyens de démultiplication, tel un réducteur épicycloïdal 22, peuvent réduire la vitesse de rotation de la soufflante et/ou du compresseur basse-pression par rapport à la turbine associée. Le flux secondaire peut être accéléré de sorte à générer une réaction de poussée nécessaire au vol d'un avion.

Le rotor 12 comprend un arbre de transmission 24 monté sur le carter au moyen de deux paliers 26.

Afin de lubrifier les éléments tournants du turboréacteur 2, un circuit de lubrification 30 est prévu. Ce circuit 30 comprend des conduits 32 pour transporter l'huile aux organes du turboréacteur la nécessitant, comme notamment la boîte d'engrenage 22 et les paliers 26. Le circuit 30 comprend à cette fin une pompe 34 pour mettre en mouvement l'huile dans le circuit 30 et un réservoir 36. Les conduits de retour d'huile des organes et leurs pompes de refoulement associées ne sont pas représentés.

La figure 1 montre également un circuit de carburant 40, muni de conduits 42, d'une pompe basse pression 44, d'une pompe haute pression 48 et d'un réservoir 46, par exemple logé dans une aile.

Un échangeur à chaleur 50 (FCOC : acronyme anglais pour Fuel Cooled Oil Cooler) est prévu pour réguler la température de l'huile dans le circuit 32. L'huile assurant la lubrification des paliers 22, 26 et 26 est échauffée et doit être refroidie. L'utilisation du carburant stocké dans les ailes qui est froid à haute altitude permet de refroidir avantageusement l'huile.

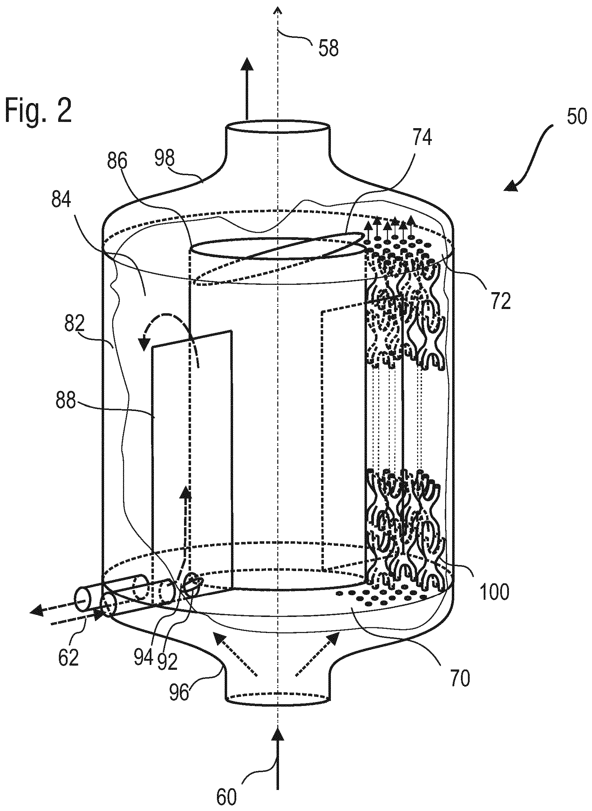

La figure 2 illustre l'échangeur de chaleur selon un mode de réalisation de l'invention.

L'échangeur de chaleur 50 comprend une matrice d'échangeur de chaleur constituée d'un réseau de mailles tubulaires 100 disposé entre deux cloisons 70, 72 dans lesquels débouchent les passages formés par le réseau de mailles tubulaires 100. Le réseau de mailles tubulaires 100 guide un premier fluide 60 (par exemple du carburant) d'un collecteur d'entrée 96 vers un collecteur de sortie 98. Le réseau de mailles tubulaires 100 est constitué d'un empilement de mailles montées en quinconce. Chaque maille comprend des ramifications sous forme de tubes curvilignes émanant d'une jonction commune. Le réseau de mailles tubulaires 100 présente un ensemble de passages qui se séparent et se rejoignent tout en assurant une redistribution du fluide entre eux. Une entité donnée de fluide pourra donc passer d'une maille à une autre en évoluant radialement et/ou circonférentiellement par rapport au centre de l'échangeur. Le réseau de mailles tubulaires 100 peut respecter des règles de symétrie ou non.

L'échangeur de chaleur 50 peut comprendre un corps muni d'une paroi latérale 82 entourant le réseau de mailles tubulaires 100, la surface interne de la paroi latérale 82 et les deux cloisons 70, 72 délimitant en partie une cavité 84 dans laquelle circule un deuxième fluide 62 (par exemple de l'huile). La paroi latérale 82 de l'échangeur de chaleur 50 peut avoir une forme sensiblement cylindrique, d'un diamètre préférentiellement compris entre 7 et 25 cm, et une hauteur préférentiellement comprise entre 10 et 60 cm, l'axe du cylindre étant aligné avec la direction de référence 58.

L'échangeur 50 peut comprendre un canal de by-pass 86 pour le premier fluide 60 en by-pass du réseau de mailles tubulaires 100, le canal de by-pass 86 étant formé dans une position centrale de l'échangeur 50, le canal de by-pass 86 étant sensiblement aligné avec la direction de référence 58. Le diamètre du canal de by-pass 86 peut être compris entre 30 et 60 % du diamètre du corps. La présence du canal de by-pass 86 permet de rigidifier la structure et assure un meilleur maintien du réseau de mailles tubulaires 100.

L'échangeur 50 peut être à courant parallèle et/ou à contre-courant. Dans l'exemple illustré, il est à la fois à courant parallèle dans une partie de l'échangeur et à contre-courant dans une autre partie de l'échangeur. À cette fin, un élément de guidage 88 est prévu pour guider le second fluide 62 dans une partie de la cavité 84 dans une direction d'écoulement de référence sensiblement parallèle à la direction de référence 58 sur au moins une majorité de la hauteur du corps. En outre, l'élément de guidage 88 guide le second fluide 62 dans une autre partie de la cavité sur au moins une majorité de la hauteur du corps dans une direction opposée à la direction d'écoulement de référence, la direction étant sensiblement parallèle à la direction de référence 58. L'élément de guidage 88 peut comprendre au moins une paroi de séparation s'étendant en partie dans un plan parallèle à la direction de référence 58 entre les deux cloisons 70, 72. L'élément de guidage 88 dans la figure 2 permet un seul aller et retour du second fluide 62. Il est bien entendu qu'un élément de guidage 88 peut être conçu pour permettre plusieurs allers et retours, et ce en jouant sur le nombre de parois de guidages disposées dans la cavité 84. L'avantage de cette conception est de présenter une entrée et une sortie de l'échangeur pour le second fluide qui sont à proximité l'une de l'autre. Dans une conception alternative à courant uniquement parallèle ou uniquement à contre-courant, l'entrée et la sortie de l'échangeur sont à distance l'une de l'autre selon l'axe de référence 58.

Le circuit du premier fluide peut comprendre une vanne 74 du type décharge et/ou thermostatique rapportée dans le canal de by-pass 86. Aussi, l'échangeur peut comprendre un by-pass de dérivation 92 pour le second fluide intégré dans le corps de l'échangeur de chaleur 50. Dans l'exemple selon la figure 2, le by-pass de dérivation 92 est formé dans la partie inférieure de la paroi de séparation servant d'élément de guidage 88. Alternativement, le canal de dérivation 92 peut être réalisé dans un module solidaire de la paroi 82 du corps de l'échangeur de chaleur 50, le module pouvant être venu de matière avec la paroi de l'échangeur de chaleur 50. Une vanne 94 du type décharge et/ou thermostatique peut être rapportée dans le canal de dérivation 92.

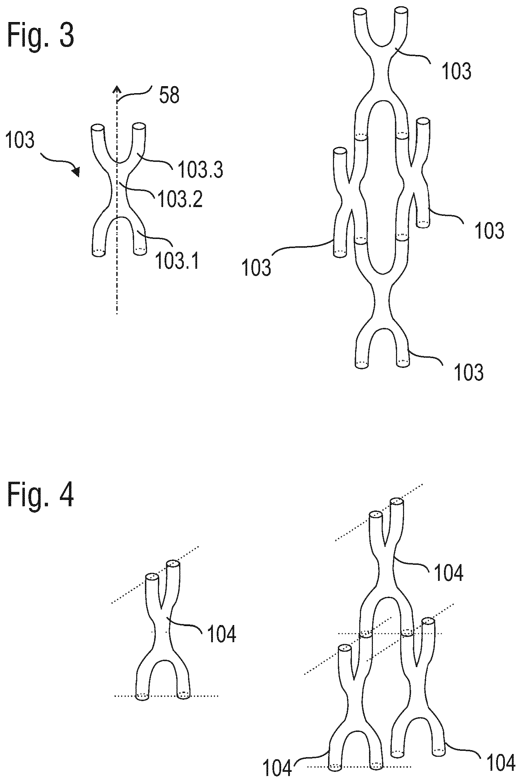

La figure 3 représente un autre mode de réalisation de l'invention où la maille 103 qui sert de motif de base au réseau de mailles tubulaires 100 comprend quatre ramifications disposées dans un plan, dont, successivement en suivant l'orientation 58, deux ramifications antérieures 103.1, une jonction 103.2 et deux ramifications postérieures 103.3. Ce motif de base peut être empilé de façon à former une feuille plane ou courbe de tubes (non représenté). Les mailles 103 d'une couche supérieure sont pivotées de par exemple 90 degrés par rapport aux mailles 103 de la couche inférieure. Cette seconde structure permet une meilleure redistribution tridimensionnelle du fluide.

La figure 4 présente un mode de réalisation de mailles 104 avec quatre ramifications dans lequel les deux ramifications postérieures sont disposées dans un plan qui est sécant par rapport aux ramifications antérieures.

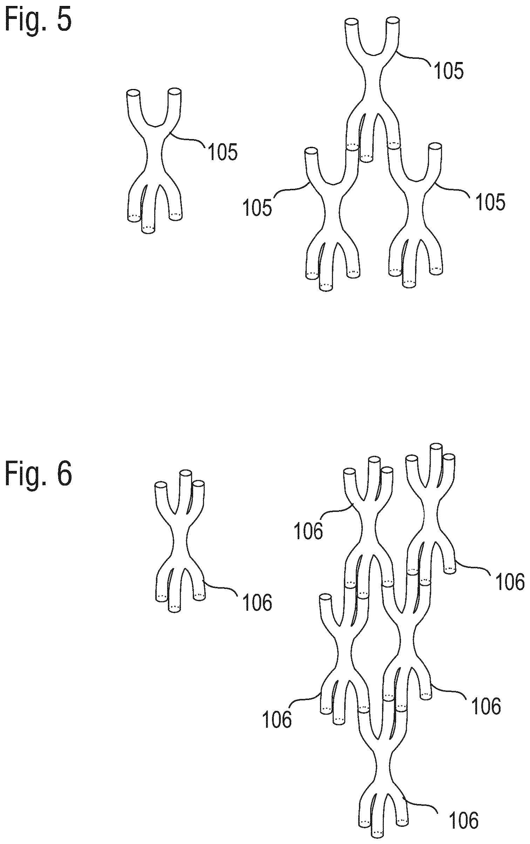

La figure 5 illustre un mode de réalisation de mailles 105 avec cinq ramifications avec deux ramifications postérieures et les trois ramifications antérieures. Cette configuration est asymétrique.

La figure 6 représente un autre mode de réalisation de mailles 106 avec six ramifications avec une symétrie de rotation. Les ramifications antérieures ou postérieures peuvent être réparties régulièrement, avec un angle d'environ 120 degrés entre les plans dans lesquels s'inscrivent les ramifications.

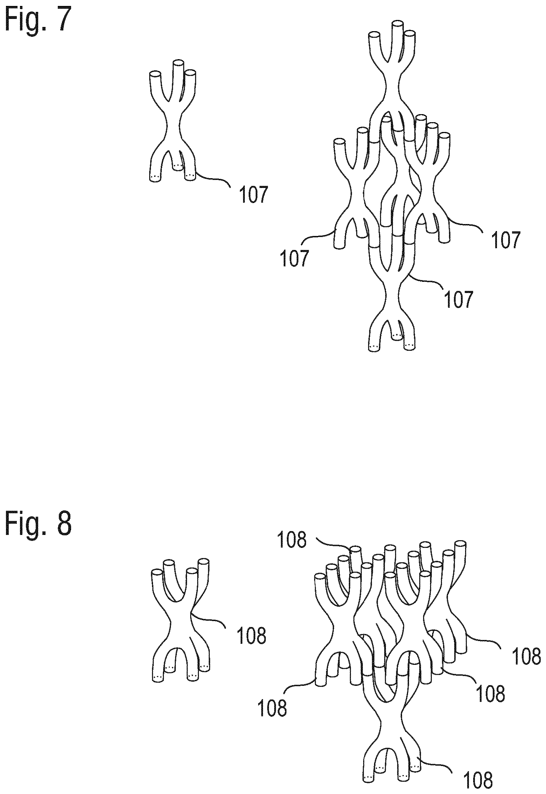

La figure 7 montre un mode de réalisation de mailles 107 avec six ramifications avec une symétrie spéculaire. Les ramifications antérieures ou postérieures peuvent être réparties régulièrement, avec un angle d'environ 120 degrés entre les plans dans lesquels s'inscrivent les ramifications.

La figure 8 illustre un mode de réalisation de mailles 108 avec huit ramifications avec une symétrie spéculaire. Les ramifications antérieures ou postérieures peuvent être réparties régulièrement, avec un angle d'environ 90 degrés entre les plans dans lesquels s'inscrivent les ramifications.

Ces différentes illustrations des mailles sont données à titre d'exemple. L'homme du métier saurait adapter le nombre de ramifications et leurs orientations, le nombre de mailles, leurs orientations relatives, en fonction de ses besoins et notamment des débits ou de la compacité désirée pour l'échangeur.

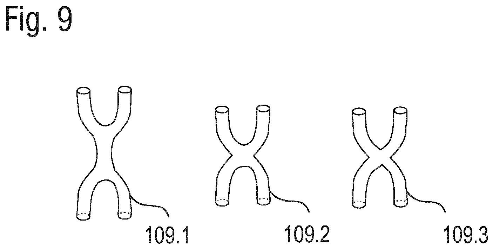

La figure 9 montre une jonction 109.1 comprenant un tube intermédiaire. Dans cette configuration la section du passage interne est sensiblement égale à la moitié de la somme des sections de passage de chaque ramification. Cette configuration donne lieu à des pertes de charge qui peuvent être souhaitées pour ralentir un débit.

Alternativement, les mailles 109.2 et 109.3 peuvent être conçues de telle sorte que les ramifications postérieures sont jointes directement aux ramifications antérieures formant une chambre au niveau de la jonction 103.2. La chambre améliore la résistance mécanique de l'ensemble par l'effet de corps creux. La jonction de la maille 109.2 comprend un arrondi pour améliorer la résistance de la structure. Par exemple, une forme en goutte d'eau - vu dans un plan parallèle à la direction de référence - peut faciliter la réalisation par fabrication additive car il n'est pas nécessaire de prévoir des renforts lors de la fabrication.

La jonction de la maille 109.3 comprend des angles vifs pour éviter la stagnation du fluide et réduire les pertes de charge. Par exemple, une forme à angles vifs tel un triangle ou un pentagone - vu dans un plan parallèle à la direction de référence - facilite la réalisation par fabrication additive car il n'est pas nécessaire de prévoir des renforts. La section des ramifications peut être de forme circulaire. D'autres formes de sections (carrée, triangulaire, rectangulaire, elliptique) sont envisageables pour contrôler la turbulence et/ou optimiser la résistance du réseau de mailles tubulaires 100. Les trois modes de réalisations de la jonction selon les mailles 109.1, 109.2 et 109.3, respectivement peuvent être combinés avec les variantes de mailles selon les figures 3 à 8.

Aussi, les mailles 103, 104, 105, 106, 107, 108, 109.1, 109.2, 109.3 peuvent être empilées suivant tout arrangement approprié, notamment selon les directions associées aux coordonnées cylindriques ou cartésiennes.

La structure d'une maille 103, 104, 105, 106, 107, 108, 109.1, 109.2, 109.3 telle que décrite dans les revendications en termes de nombre de ramifications et de dispositions ne se limite pas aux exemples donnés dans les figures.

La complexité de la structure du réseau de mailles ne pourrait pas être obtenue par des moyens conventionnels de fabrication et est donc réalisée, selon l'invention, par fabrication additive, à partir de poudre, éventuellement en titane ou en aluminium. L'épaisseur des couches peut être comprise entre 20 µm et 50 µm, ce qui permet d'atteindre une épaisseur des tubes formant les mailles de l'ordre de 0,4 à 0,6 mm, et des cloisons de 0,60 mm.

Dans le procédé selon l'invention (non représenté), deux étapes sont réalisées :
(a) conception de l'échangeur de chaleur 50 ;
(b) réalisation de l'échangeur de chaleur 50 par fabrication additive suivant une direction d'impression, la direction d'impression étant parallèle à la direction de référence 58.

L'homme du métier comprendra que l'invention ne se limite pas à un échangeur avec un by-pass central.

Avec la fabrication additive, il est possible de prévoir des passages de formes complexes qui s'entrecoupent au travers de la matrice.

Aussi, l'utilisation de la matrice et de l'échangeur selon l'invention pour du carburant et de l'huile ne se limite pas à cet exemple.

## Revendications

1. Échangeur de chaleur (50) entre un premier fluide (60) et un second fluide (62), notamment un échangeur de chaleur (50) de turbomachine (2), l'échangeur de chaleur (50) comprenant :
une direction de référence (58) ; et
un réseau de mailles tubulaires (100) délimitant un passage intérieur pour le premier fluide (60), le réseau de mailles (100) comprenant une multitude de mailles (103, 104, 105, 106, 107, 108, 109.1, 109.2, 109.3), chacune des mailles (103, 104, 105, 106, 107, 108, 109.1, 109.2, 109.3), étant formées, successivement selon la direction de référence (58), d'au moins deux ramifications curvilignes, dites antérieures (103.1), d'une jonction (103.2) où se rejoignent les deux ramifications antérieures (103.1), et d'au moins deux ramifications curvilignes, dites postérieures (103.3), se séparant à partir de la jonction (103.2) ;
**caractérisé en ce que**
la multitude de mailles (103, 104, 105, 106, 107, 108, 109.1, 109.2, 109.3) comprend au moins une première maille (103, 104, 105, 106, 107, 108, 109.1, 109.2, 109.3), au moins une ramification antérieure (103.1) de la première maille (103, 104, 105, 106, 107, 108, 109.1, 109.2, 109.3) étant connectée à au moins une ramification postérieure (103.3) d'une deuxième maille (103, 104, 105, 106, 107, 108, 109.1, 109.2, 109.3) et au moins une autre ramification antérieure (103.1) de la première maille (103, 104, 105, 106, 107, 108, 109.1, 109.2, 109.3) étant connectée à au moins une ramification postérieure (103.3) d'une troisième maille (103, 104, 105, 106, 107, 108, 109.1, 109.2, 109.3), distincte de la deuxième maille (103, 104, 105, 106, 107, 108, 109.1, 109.2, 109.3), l'échangeur (50) comprenant un corps muni d'une paroi latérale (82), la face interne de ladite paroi (82) délimitant en partie une cavité (84) dans laquelle circule le deuxième fluide (62), la paroi latérale (82) du corps de l'échangeur (50) ayant une forme sensiblement cylindrique, l'axe de la forme sensiblement cylindrique étant aligné avec la direction de référence (58), l'échangeur étant à courant parallèle et/ou à contre-courant.

2. Échangeur de chaleur (50) selon la revendication 1, **caractérisé en ce que** l'échangeur (50) comprend un empilement de 5 à 40 couches de mailles (103, 104, 105, 106, 107, 108, 109.1, 109.2, 109.3) dans la direction de référence (58) et/ou l'échangeur comprend entre 200 et 3000 mailles (103, 104, 105, 106, 107, 108, 109.1, 109.2, 109.3).

3. Échangeur de chaleur (50) selon l'une des revendications 1 ou 2, **caractérisé en ce que** le nombre de ramifications antérieures (103.1) est différent du nombre de ramifications postérieures (103.3) pour une maille (103, 104, 105, 106, 107, 108, 109.1, 109.2, 109.3) donnée.

4. Échangeur de chaleur (50) selon l'une des revendications 1 à 3, **caractérisé en ce que** le nombre de ramifications de chaque maille (103, 104, 105, 106, 107, 108, 109.1, 109.2, 109.3) est de 4, 6, 8, 10 ou 12.

5. Échangeur de chaleur (50) selon l'une des revendications 1 à 4, **caractérisé en ce qu'**au moins une des mailles (103, 104, 105, 106, 107, 108, 109.1, 109.2, 109.3) supporte au moins une ailette interne ou externe.

6. Échangeur de chaleur (50) selon l'une des revendications 1 à 5, **caractérisé en ce que** le réseau de mailles tubulaires (100) est disposé entre une cloison d'entrée (70) et une cloison de sortie (72) dans lesquelles débouchent les passages formés par le réseau de mailles tubulaires (100), le réseau de mailles tubulaires (100) guidant le premier fluide (60) d'un collecteur d'entrée (96) vers un collecteur de sortie (98), le collecteur d'entrée (96) étant délimité en partie par la cloison d'entrée (70) et le collecteur de sortie (96) étant délimité en partie par la cloison de sortie (72).

7. Échangeur de chaleur (50) selon l'une des revendications 1 à 6, **caractérisé en ce que** le diamètre de la forme sensiblement cylindrique est compris entre 7 et 25 cm et sa hauteur est comprise entre 10 et 60 cm.

8. Échangeur de chaleur (50) selon l'une des revendications 1 à 7, **caractérisé en ce que** l'échangeur (50) comprend un canal de by-pass (86) pour le premier fluide (60) en by-pass du réseau de mailles tubulaires (100), le canal de by-pass (86) étant disposé dans une position centrale de l'échangeur (50) et sensiblement aligné avec la direction de référence (58), le diamètre du canal de by-pass (86) étant compris préférentiellement entre 30 et 60 % du diamètre du corps.

9. Échangeur de chaleur (50) selon la revendication 8, **caractérisé en ce que** l'échangeur de chaleur (50) comprend une vanne (74) du type décharge et/ou thermostatique rapportée dans le canal de by-pass (86).

10. Échangeur de chaleur (50) selon l'une des revendications 1 à 9, **caractérisé en ce qu'**au moins un élément de guidage (88) et/ou la face interne de la paroi latérale (82) guide(nt) le second fluide (62) dans une partie de la cavité (84) dans une direction d'écoulement de référence sensiblement parallèle à la direction de référence (58) sur au moins une majorité de la hauteur du corps, et **en ce que** l'élément de guidage (88) guide en outre le second fluide (62) dans une autre partie de la cavité (84) sur au moins une majorité de la hauteur du corps dans une direction opposée à la direction d'écoulement de référence, la direction étant sensiblement parallèle à la direction de référence (58).

11. Échangeur de chaleur (50) selon la revendication 10, **caractérisé en ce que** l'élément de guidage comprend au moins une paroi de séparation s'étendant en partie dans un plan parallèle à la direction de référence (58) entre la cloison d'entrée (70) et la cloison de sortie (72).

12. Échangeur de chaleur (50), selon une des revendications 1 à 11, **caractérisé en ce que** l'échangeur de chaleur (50) est monobloc et est réalisé par fabrication additive à base de poudre d'aluminium.

13. Turboréacteur (2) d'aéronef comprenant des paliers (26) et notamment une transmission (22) entraînant une soufflante (16), **caractérisé en ce qu'**il comprend en outre au moins un échangeur (50) selon l'une des revendications 1 à 12 dans lequel du carburant fait office de premier fluide (60) et de l'huile fait office de deuxième fluide (62).

14. Procédé de réalisation d'un échangeur de chaleur (50), selon l'une des revendications 1 à 12, le procédé comprenant les étapes suivantes :
(a) conception de l'échangeur de chaleur (50) ;
(b) réalisation de l'échangeur de chaleur (50), par fabrication additive suivant une direction d'impression parallèle à la direction de référence (58).

15. Procédé selon la revendication 14, **caractérisé en ce qu'**il comprend, lors de l'étape (b) réalisation, des couches successives et parallèles entre elles sont réalisées et vu dans un plan perpendiculaire au plan des couches, les mailles sont fabriquées avec un profile en forme de goutte d'eau ou en forme pentagonale, éventuellement allongée dans la direction d'impression, au niveau des jonctions.

## Patentansprüche

1. Wärmetauscher (50) zwischen einem ersten Fluid (60) und einem zweiten Fluid (62), insbesondere ein Wärmetauscher (50) einer Turbomaschine (2), wobei der Wärmetauscher (50) umfasst:
eine Referenzrichtung (58); und
ein Netzwerk von Rohrmaschen (100), das einen Innenraum für das erste Fluid (60) begrenzt, wobei das Netzwerk von Rohrmaschen (100) eine Vielzahl von Maschen (103, 104, 105, 106, 107, 108, 109.1, 109.2, 109.3) umfasst, wobei jede der Maschen (103, 104, 105, 106, 107, 108, 109.1, 109.2, 109.3) nacheinander entlang der Referenzrichtung (58) aus mindestens zwei gekrümmten Verzweigungen, sogenannten vorderen Verzweigungen (103.1), einer Verbindung (103.2), an der die beiden vorderen Verzweigungen (103.1) zusammenlaufen, und mindestens zwei gekrümmten Verzweigungen, sogenannten hinteren Verzweigungen (103.3), die sich von der Verbindung (103.2) trennen, gebildet sind;
**dadurch gekennzeichnet, dass**
die Vielzahl von Maschen (103, 104, 105, 106, 107, 108, 109.1, 109.2, 109.3) mindestens eine erste Masche (103, 104, 105, 106, 107, 108, 109.1, 109.2, 109.3) umfasst, wobei mindestens eine vordere Verzweigung (103.1) der ersten Masche (103, 104, 105, 106, 107, 108, 109.1, 109.2, 109.3) mit mindestens einer hinteren Verzweigung (103.3) einer zweiten Masche (103, 104, 105, 106, 107, 108, 109.1, 109.2, 109.3) verbunden ist und mindestens eine andere vordere Verzweigung (103.1) der ersten Masche (103, 104, 105, 106, 107, 108, 109.1, 109.2, 109.3) mit mindestens einer hinteren Verzweigung (103.3) einer dritten Masche (103, 104, 105, 106, 107, 108, 109.1, 109.2, 109.3), die sich von der zweiten Masche (103, 104, 105, 106, 107, 108, 109.1, 109.2, 109.3) unterscheidet, verbunden ist, wobei der Wärmetauscher (50) einen Körper mit einer Seitenwand (82) umfasst, wobei die innere Fläche der Seitenwand (82) teilweise eine Kavität (84) begrenzt, in der das zweite Fluid (62) zirkuliert, wobei die Seitenwand (82) des Körpers des Wärmetauschers (50) eine im Wesentlichen zylindrische Form aufweist, wobei die Achse der im Wesentlichen zylindrischen Form mit der Referenzrichtung (58) ausgerichtet ist, wobei der Wärmetauscher parallelströmend und/oder gegenströmend ist.

2. Wärmetauscher (50) nach Anspruch 1, **dadurch gekennzeichnet, dass** der Wärmetauscher (50) einen Stapel von 5 bis 40 Schichten von Maschen (103, 104, 105, 106, 107, 108, 109.1, 109.2, 109.3) in der Referenzrichtung (58) umfasst und/oder der Wärmetauscher zwischen 200 und 3000 Maschen (103, 104, 105, 106, 107, 108, 109.1, 109.2, 109.3) umfasst.

3. Wärmetauscher (50) nach einem der Ansprüche 1 oder 2, **dadurch gekennzeichnet, dass** die Anzahl der vorderen Verzweigungen (103.1) unterschiedlich von der Anzahl der hinteren Verzweigungen (103.3) für eine gegebene Masche (103, 104, 105, 106, 107, 108, 109.1, 109.2, 109.3) ist.

4. Wärmetauscher (50) nach einem der Ansprüche 1 bis 3, **dadurch gekennzeichnet, dass** die Anzahl der Verzweigungen jeder Masche (103, 104, 105, 106, 107, 108, 109.1, 109.2, 109.3) 4, 6, 8, 10 oder 12 beträgt.

5. Wärmetauscher (50) nach einem der Ansprüche 1 bis 4, **dadurch gekennzeichnet, dass** mindestens eine der Maschen (103, 104, 105, 106, 107, 108, 109.1, 109.2, 109.3) mindestens eine interne oder externe Rippe trägt.

6. Wärmetauscher (50) nach einem der Ansprüche 1 bis 5, **dadurch gekennzeichnet, dass** das Netzwerk von Rohrmaschen (100) zwischen einer Eintrittswand (70) und einer Austrittswand (72) angeordnet ist, in denen die durch das Netzwerk von Rohrmaschen (100) gebildeten Durchgänge münden, wobei das Netzwerk von Rohrmaschen (100) das erste Fluid (60) von einem Eintrittssammler (96) zu einem Austrittssammler (98) führt, wobei der Eintrittssammler (96) teilweise durch die Eintrittswand (70) und der Austrittssammler (98) teilweise durch die Austrittswand (72) begrenzt ist.

7. Wärmetauscher (50) nach einem der Ansprüche 1 bis 6, **dadurch gekennzeichnet, dass** der Durchmesser der im Wesentlichen zylindrischen Form zwischen 7 und 25 cm liegt und seine Höhe zwischen 10 und 60 cm liegt.

8. Wärmetauscher (50) nach einem der Ansprüche 1 bis 7, **dadurch gekennzeichnet, dass** der Wärmetauscher (50) einen Bypass-Kanal (86) für das erste Fluid (60) im Bypass des Netzwerks von Rohrmaschen (100) umfasst, wobei der Bypass-Kanal (86) in einer zentralen Position des Wärmetauschers (50) angeordnet und im Wesentlichen mit der Referenzrichtung (58) ausgerichtet ist, wobei der Durchmesser des Bypass-Kanals (86) vorzugsweise zwischen 30 und 60 % des Durchmessers des Körpers liegt.

9. Wärmetauscher (50) nach Anspruch 8, **dadurch gekennzeichnet, dass** der Wärmetauscher (50) ein Ventil (74) vom Typ Entlastungs- und/oder Thermostatventil im Bypass-Kanal (86) umfasst.

10. Wärmetauscher (50) nach einem der Ansprüche 1 bis 9, **dadurch gekennzeichnet, dass** mindestens ein Führungselement (88) und/oder die innere Fläche der Seitenwand (82) das zweite Fluid (62) in einem Teil der Kavität (84) in einer Strömungsrichtung, die im Wesentlichen parallel zur Referenzrichtung (58) ist, auf mindestens einer Mehrheit der Höhe des Körpers führt, und dass das Führungselement (88) das zweite Fluid (62) in einem anderen Teil der Kavität (84) auf mindestens einer Mehrheit der Höhe des Körpers in einer Richtung, die der Strömungsrichtung entgegengesetzt ist, führt, wobei die Richtung im Wesentlichen parallel zur Referenzrichtung (58) ist.

11. Wärmetauscher (50) nach Anspruch 10, **dadurch gekennzeichnet, dass** das Führungselement mindestens eine Trennwand umfasst, die teilweise in einer Ebene parallel zur Referenzrichtung (58) zwischen der Eintrittswand (70) und der Austrittswand (72) verläuft.

12. Wärmetauscher (50) nach einem der Ansprüche 1 bis 11, **dadurch gekennzeichnet, dass** der Wärmetauscher (50) einteilig ist und durch additive Fertigung auf Basis von Aluminium-Pulver hergestellt wird.

13. Turbofan-Triebwerk (2) eines Luftfahrzeugs, umfassend Lager (26) und insbesondere ein Getriebe (22), das einen Lüfter (16) antreibt, **dadurch gekennzeichnet, dass** es ferner mindestens einen Wärmetauscher (50) nach einem der Ansprüche 1 bis 12 umfasst, in dem Kraftstoff als erstes Fluid (60) und Öl als zweites Fluid (62) fungiert.

14. Verfahren zur Herstellung eines Wärmetauschers (50) nach einem der Ansprüche 1 bis 12, wobei das Verfahren die folgenden Schritte umfasst:
(a) Entwurf des Wärmetauschers (50);
(b) Herstellung des Wärmetauschers (50) durch additive Fertigung entlang einer Druckrichtung, die parallel zur Referenzrichtung (58) verläuft.

15. Verfahren nach Anspruch 14, **dadurch gekennzeichnet, dass** es während des Herstellungsschritts (b) umfasst, dass aufeinanderfolgende und parallele Schichten hergestellt werden und in einer Ebene senkrecht zur Ebene der Schichten betrachtet, die Maschen mit einem tropfenförmigen oder pentagonalen Profil, gegebenenfalls in Druckrichtung verlängert, an den Verbindungen hergestellt werden.

## Claims

1. A heat exchanger (50) between a first fluid (60) and a second fluid (62), notably a turbomachine (2) heat exchanger (50), the heat exchanger (50) comprising:
a reference direction (58); and
a tubular mesh network (100) defining an inner passage for the first fluid (60), the mesh network (100) comprising a multitude of meshes (103, 104, 105, 106, 107, 108, 109.1, 109.2, 109.3), each of the meshes (103, 104, 105, 106, 107, 108, 109.1, 109.2, 109.3) being formed, successively according to the reference direction (58), of at least two curvilinear branches, called anterior branches (103.1), a junction (103.2) where the two anterior branches (103.1) meet, and at least two curvilinear branches, called posterior branches (103.3), separating from the junction (103.2);
**characterized in that**
the multitude of meshes (103, 104, 105, 106, 107, 108, 109.1, 109.2, 109.3) comprises at least a first mesh (103, 104, 105, 106, 107, 108, 109.1, 109.2, 109.3), at least one anterior branch (103.1) of the first mesh (103, 104, 105, 106, 107, 108, 109.1, 109.2, 109.3) being connected to at least one posterior branch (103.3) of a second mesh (103, 104, 105, 106, 107, 108, 109.1, 109.2, 109.3) and at least another anterior branch (103.1) of the first mesh (103, 104, 105, 106, 107, 108, 109.1, 109.2, 109.3) being connected to at least one posterior branch (103.3) of a third mesh (103, 104, 105, 106, 107, 108, 109.1, 109.2, 109.3), distinct from the second mesh (103, 104, 105, 106, 107, 108, 109.1, 109.2, 109.3), the exchanger (50) comprising a body provided with a lateral wall (82), the inner face of said wall (82) partially defining a cavity (84) in which the second fluid (62) circulates, the lateral wall (82) of the exchanger body (50) having a substantially cylindrical shape, the axis of the substantially cylindrical shape being aligned with the reference direction (58), the exchanger being parallel flow and/or counterflow.

2. The heat exchanger (50) according to claim 1, **characterized in that** the exchanger (50) comprises a stack of 5 to 40 layers of meshes (103, 104, 105, 106, 107, 108, 109.1, 109.2, 109.3) in the reference direction (58) and/or the exchanger comprises between 200 and 3000 meshes (103, 104, 105, 106, 107, 108, 109.1, 109.2, 109.3).

3. The heat exchanger (50) according to one of claims 1 or 2, **characterized in that** the number of anterior branches (103.1) is different from the number of posterior branches (103.3) for a given mesh (103, 104, 105, 106, 107, 108, 109.1, 109.2, 109.3).

4. The heat exchanger (50) according to one of claims 1 to 3, **characterized in that** the number of branches of each mesh (103, 104, 105, 106, 107, 108, 109.1, 109.2, 109.3) is 4, 6, 8, 10, or 12.

5. The heat exchanger (50) according to one of claims 1 to 4, **characterized in that** at least one of the meshes (103, 104, 105, 106, 107, 108, 109.1, 109.2, 109.3) supports at least one internal or external fin.

6. The heat exchanger (50) according to one of claims 1 to 5, **characterized in that** the tubular mesh network (100) is disposed between an inlet partition (70) and an outlet partition (72) into which the passages formed by the tubular mesh network (100) open, the tubular mesh network (100) guiding the first fluid (60) from an inlet collector (96) to an outlet collector (98), the inlet collector (96) being partially defined by the inlet partition (70) and the outlet collector (98) being partially defined by the outlet partition (72).

7. The heat exchanger (50) according to one of claims 1 to 6, **characterized in that** the diameter of the substantially cylindrical shape is between 7 and 25 cm and its height is between 10 and 60 cm.

8. The heat exchanger (50) according to one of claims 1 to 7, **characterized in that** the exchanger (50) comprises a bypass channel (86) for the first fluid (60) bypassing the tubular mesh network (100), the bypass channel (86) being disposed in a central position of the exchanger (50) and substantially aligned with the reference direction (58), the diameter of the bypass channel (86) being preferably between 30 and 60% of the diameter of the body.

9. The heat exchanger (50) according to claim 8, **characterized in that** the heat exchanger (50) comprises a discharge and/or thermostatic valve (74) fitted in the bypass channel (86).

10. The heat exchanger (50) according to one of claims 1 to 9, **characterized in that** at least one guide element (88) and/or the inner face of the lateral wall (82) guide(s) the second fluid (62) in a part of the cavity (84) in a reference flow direction substantially parallel to the reference direction (58) over at least a majority of the height of the body, and **in that** the guide element (88) further guides the second fluid (62) in another part of the cavity (84) over at least a majority of the height of the body in a direction opposite to the reference flow direction, the direction being substantially parallel to the reference direction (58).

11. The heat exchanger (50) according to claim 10, **characterized in that** the guide element comprises at least one separating wall extending partly in a plane parallel to the reference direction (58) between the inlet partition (70) and the outlet partition (72).

12. The heat exchanger (50) according to one of claims 1 to 11, **characterized in that** the heat exchanger (50) is monobloc and is produced by additive manufacturing using aluminum powder.

13. Aircraft turbofan engine (2) comprising bearings (26) and notably a transmission (22) driving a fan (16), **characterized in that** it further comprises at least one heat exchanger (50) according to one of claims 1 to 12 in which fuel serves as the first fluid (60) and oil serves as the second fluid (62).

14. Method for producing a heat exchanger (50) according to one of claims 1 to 12, the method comprising the following steps:
(a) designing the heat exchanger (50);
(b) producing the heat exchanger (50) by additive manufacturing following a printing direction parallel to the reference direction (58).

15. Method according to claim 14, **characterized in that** during step (b) production, successive and parallel layers are produced, and viewed in a plane perpendicular to the plane of the layers, the meshes are manufactured with a profile in the shape of a drop of water or in a pentagonal shape, optionally elongated in the printing direction, at the junctions.
